# EUROPÄISCHE PATENTSCHRIFT

(11) **EP 3 308 988 B1**
(45) Veröffentlichungstag und Bekanntmachung des Hinweises auf die Patenterteilung: **01.01.2020**
(21) Anmeldenummer: 16197226.0
(22) Anmeldetag: 04.11.2016
(51) Int. Cl.: B60D 5/00, B61D 17/22, B62D 47/02

(54) **ÜBERGANGSBALG EINES ÜBERGANGS ZWISCHEN ZWEI GELENKIG MITEINANDER VERBUNDENER FAHRZEUGE**
BELLOWS FOR THE TRANSITION BETWEEN TWO VEHICLES WITH A JOINTED CONNECTION
SOUFFLET DE PASSAGE ENTRE DEUX VÉHICULES RELIÉS DE MANIÈRE ARTICULÉE

(30) Priorität: 12.10.2016 EP 16193497
(43) Veröffentlichungstag der Anmeldung: 18.04.2018
(73) Patentinhaber: Hübner GmbH & Co. KG, 34123 Kassel (DE)
(72) Erfinder: Nebel, Christian, 34346 Hann. Münden (DE)
(74) Vertreter: Patentanwälte Walther Hinz Bayer PartGmbB

(56) Entgegenhaltungen:
- EP-A1- 2 468 600
- DE-A1- 3 342 107
- DE-B3-102015 205 965

## Beschreibung

Die vorliegende Erfindung betrifft einen Übergangsbalg eines Übergangs zwischen zwei gelenkig miteinander verbundener Fahrzeuge, wobei der Übergangsbalg Übergangsbalgrahmen aufweist, wobei der Übergangsbalg einen gesonderten mit Kanalbalgrahmen versehenen Kanalbalg aufweist, wobei zur Verbindung des Kanalbalges mit dem Übergangsbalg mindestens ein Befestigungsmittel vorgesehen ist.

Aus der DE 10 2015 205 965 B3 ist ein Übergangsbalg mit einem inneren und äußeren Balg bekannt. Zwischen den beiden Bälgen können Lüftungskanäle vorgesehen sein. Zur Fixierung eines Lüftungskanals am Balg sind am Lüftungskanal und am Balg des Übergangs angeordnete erste und zweite Verbindungselemente vorgesehen, die z. B. durch Kleben, Schweißen oder Nähen mit dem Balg des Übergangs und dem Lüftungskanal verbunden sein können. Die Verbindung der ersten und zweiten Verbindungselemente kann hierbei lösbar sein, beispielsweise durch Einclipsen des kugelförmigen Endes des einen Verbindungselements in eine entsprechende kugelförmige Aussparung des anderen Verbindungselements.

Übergangsbälge der eingangs genannten Art sind aus dem Stand der Technik ebenfalls bekannt. Insbesondere sind Übergangsbälge bekannt, wobei auf der Außenseite des Übergangsbalges ein Kanalbalg als Klimakanal vorgesehen ist. Der Übergangsbalg weist in Längsrichtung hintereinander angeordnete Balgrahmen auf, die die Umlenkungen für die einzelnen Falten oder Wellen bilden. Die Übergangsrahmen sind hierbei entsprechend der Form des Balges tunnelartig, insbesondere tunnelartig umlaufend ausgebildet.

Auch der Kanalbalg weist mehrere hintereinander angeordnete Kanalbalgrahmen auf, wobei hierbei ebenso wie bei dem Übergangsbalg die Kanalbalgrahmen umlaufend, insbesondere tunnelartig oder kastenförmig umlaufend ausgebildet sind.

Wie bereits zu eingangs erläutert, sind Kanalbälge als Klimakanäle bereits bekannt. Zur Fixierung des bekannten als Klimakanal fungierenden Kanalbalges ist vorgesehen, dass die Kanalbalgrahmen des Kanalbalges mithilfe von Übersetzprofilen mit den Balgrahmen des Übergangsbalges verbunden sind. Das heißt, dass der Kanalbalg durch die Übersetzprofile, die insofern einen etwa Z-förmigen Verlauf aufweisen, auf dem Übergangsbalg aufgeständert ist. Dabei kommen pro Balgrahmen zwei Übersetzprofile zum Einsatz, wobei die Übersetzprofile seitlich vom Klimakanal verlaufend an dem Balgrahmen befestigt sind. Nachteilig hierbei ist Folgendes: bei Kurvenfahrt des Fahrzeugs wirken Kräfte auf die Übersetzprofile, wobei die Größe der Kräfte von der Breite des Kanalbalges bzw. dem Abstand der Übersetzprofile abhängt.

Die Verbindung der Übersetzprofile mit den Kanalbalgrahmen des Kanalbalges erfolgt hierbei beispielsweise durch Crimpen, also durch eine Klemm- oder Quetschverbindung. Muss der Klimakanal vom Übergangsbalg gelöst werden, beispielsweise, wenn ein solcher Klimakanal gesäubert werden muss, dann ist es erforderlich, dass mithilfe geeigneter Werkzeuge die Crimpverbindung gelöst wird. Nachteilig hierbei ist also nicht nur, dass zum Lösen des Kanalbalges entsprechendes Werkzeug zum Lösen der Crimpverbindung erforderlich ist, sondern dass darüber hinaus auch beim Lösen der Übersetzprofile die Gefahr besteht, dass einerseits die Übersetzprofile beschädigt werden, mithin ausgetauscht werden müssen, und dass andererseits auch bei der Verwendung der entsprechenden Werkzeuge der Kanalbalg als solcher beschädigt wird.

Die der Erfindung zugrunde liegende Aufgabe, besteht demzufolge darin, hier Abhilfe zu schaffen. Insbesondere soll der Kanalbalg einfach und werkzeuglos montiert bzw. demontiert werden, wobei darüber hinaus sichergestellt sein soll, dass die Verbindung zwischen Kanalbalg und Übergangsbalg sicher, das heißt dauerhaft ist.

Zur Lösung der Aufgabe wird erfindungsgemäß vorgeschlagen, dass das Befestigungsmittel als zwischen Übergangsbalg und Kanalbalg angeordneter Halter ausgebildet ist, der zumindest mit dem einen Ende mit einem Kanalbalgrahmen des Kanalbalges und mit dem anderen Ende mit dem Balgrahmen in Verbindung steht, wobei die Verbindung zwischen Übergangsbalgrahmen und Halter und/oder Kanalbalgrahmen und Halter als lösbare Steckverbindung ausgebildet ist. Durch eine solche lösbare Steckverbindung des Halters zum Beispiel mit einem Kanalbalgrahmen des Kanalbalges wird erreicht, dass werkzeuglos und ohne Beschädigung des Kanalbalges und des Übergangsbalges der Kanalbalg vom Übergangsbalg gelöst werden kann. Eine lösbare Steckverbindung im Sinne der Erfindung ist hierbei eine solche, die beliebig oft lösbar ist, ohne dass hierbei ein nennenswerter Verschleiß an den beteiligten Bauteilen, insbesondere an dem Halter entsteht.

Vorteilhafte Merkmale und Ausgestaltungen der Erfindung ergeben sich aus den Unteransprüchen.

So ist insbesondere vorgesehen, dass der Kanalbalg sich über die Länge des Übergangsbalges erstreckt, sodass der Kanalbalg unmittelbar auch mit den entsprechenden Öffnungen in den Stirnwänden der gelenkig miteinander verbundenen Fahrzeugteile verbindbar ist.

Der Kanalbalg ist vorteilhaft mittig, parallel zur Mittellängsachse an dem Übergangsbalg, insbesondere auf dem Übergangsbalg angeordnet. Durch die mittige Anordnung des Kanalbalges auf dem Übergangsbalg wird erreicht, dass bei einer Knickbewegung des Übergangsbalges die hierbei auf den Kanalbalg wirkende Verformung minimiert wird. Das heißt, durch die zwischen Kanalbalg und Übergangsbalg angeordneten Halter, die insbesondere mittig auf dem Übergangsbalg an den Übergangsbalgrahmen angeordnet sind, wird die Querschnittsverengung des Klimakanals bei Kurvenfahrt minimiert. Der Gefahr des Einfallens des Kanalbalges wird gleichfalls dadurch entgegengewirkt, dass die Halter sich in ihrer Länge bis nahe an den Eckbereich des Balges erstrecken können.

Der Halter weist zur Fixierung an dem Kanalbalgrahmen des Kanalbalges und/oder dem Übergangsbalgrahmen des Übergangsbalges mindestens eine Klemmnut auf. Die Länge der Klemmnut bzw. entsprechend die Länge des Halters bestimmt die Klemmkraft zwischen dem Halter einerseits und zum Beispiel dem Kanalbalgrahmen andererseits. In Bezug auf die Klemmnut, die an einer Stirnseite des Halters angeordnet ist, ist im Einzelnen vorgesehen, dass die Klemmnut eine sich längs der Klemmnut und in der Klemmnut erstreckende, in etwa der Querschnittsfläche des Kanalbalgrahmens des Kanalbalges oder des Übergangsbalgrahmens des Übergangsbalges entsprechende Aussparung aufweist. Hieraus wird deutlich, dass der entsprechende Balgrahmen quasi formschlüssig durch die Klemmnut aufgenommen wird.

Nach einem besonders vorteilhaften Merkmal ist in diesem Zusammenhang vorgesehen, dass die Klemmnut einen sich an die Aussparung anschließenden Klemmhals aufweist. Der Klemmhals stelle sich als Schlitz im Halter dar, der sich im Wesentlichen über die Gesamtlänge des Halters erstreckt. Durch den Schlitz besteht die Möglichkeit, die Klemmnut im Sinne einer Klammer zu spreizen, um den Kanalbalgrahmen in die Aussparung der Klemmnut einrasten zu lassen. Unter anderem bestimmt auch die Länge und Breite des Klemmhalses die Klemmkraft.

Um das Einführen des entsprechenden Balgrahmens in die Klemmnut zu erleichtern, ist nach einem weiteren Merkmal der Erfindung vorgesehen, dass die Klemmnut einen sich über die Länge der Klemmnut erstreckenden Einführkonus aufweist.

Ist lediglich eine Klemmnut, zum Beispiel für den Kanalbalgrahmen, an dem jeweiligen Halter vorgesehen, so kann zur Befestigung des Halters an dem Übergangsbalgrahmen der Halter vorzugsweise eine Balgrahmennut aufweisen, das heißt, dass die Balgrahmennut entsprechend der Querschnittsfläche des Balgrahmens ausgebildet ist. Der Balgrahmen ist in der Balgrahmennut fixiert, zum Beispiel vernietet. Hieraus wird deutlich, dass der mindestens eine Halter zum Lösen des Kanalbalges mit dem Übergangsbalgrahmen des Übergangsbalges verbunden bleiben kann und lediglich zur Abnahme des Kanalbalges von dem Übergangsbalg der Kanalbalgrahmen aus der Klemmverbindung des Halters gelöst werden muss. Es kann aber auch an jeder Stirnseite des Halters eine Klemmnut für den Kanalbalgrahmen und den Übergangsbatgrahmen angeordnet sein. Um insbesondere eine stabile Verbindung zwischen dem Übergangsbalg und dem Kanalbalg herstellen zu können, ist vorgesehen, dass die Verbindung zwischen dem Übergangsbalg einerseits und dem Kanalbalg andererseits durch eine Mehrzahl von hintereinander angeordneten Haltern erfolgt; die Halter sind hierbei jeweils nach Art eines Ständers zwischen Kanalbalg und Übergangsbalg aufgestellt und sind plattenförmig ausgebildet, können allerdings auch die Form eines Rahmens aufweisen.

Nach einem weiteren Merkmal der Erfindung kann der Kanalbalg der Luftführung einer Klimaanlage dienen. Das heißt, der Kanalbalg kann als Klimakanal ausgeführt sein. Denkbar ist allerdings auch, den Kanalbalg zur Führung von Versorgungsleitungen wie beispielsweise Druckluft-, Strom- oder Hydraulikleitungen zu verwenden, um eine Beschädigung dieser Leitungen bei der Führung solcher Leitungen zwischen den beiden gelenkig miteinander verbundenen Fahrzeugen zu vermeiden.

Anhand der Zeichnungen wird die Erfindung beispielsweise nachstehend näher erläutert.
- Fig. 1: zeigt schematisch in einer Seitenansicht ein Gelenkfahrzeug mit zwei Fahrzeugteilen, die durch einen Übergang miteinander in Verbindung stehen;
- Fig. 2: zeigt den erfindungsgemäßen Halter in perspektivischer Darstellung;
- Fig. 3: zeigt den Dachausschnitt eines Übergangs mit auf dem Dach des Übergangsbalges aufsitzendem Kanalbalg.

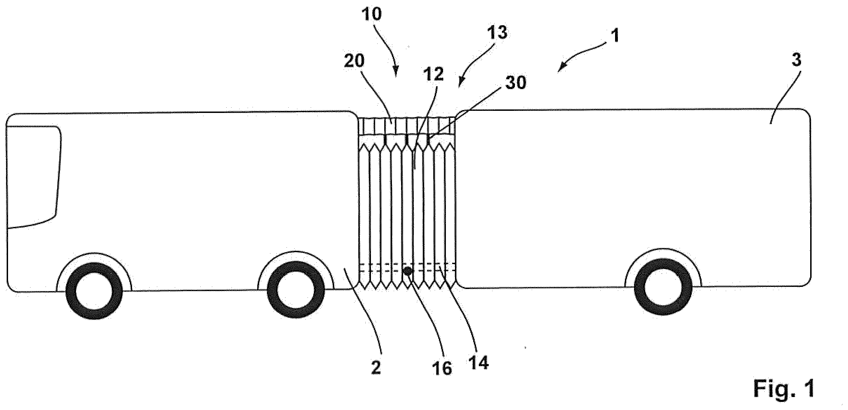

Das in Fig. 1 mit 1 bezeichnete Gelenkfahrzeug, umfasst die beiden Fahrzeugteile 2 und 3, die durch den insgesamt mit 10 bezeichneten Übergang miteinander verbunden sind. Der Übergang 10 weist den Übergangsbalg 12 sowie die von dem Übergangsbalg umschlossene Brücke oder Plattform 14 auf. Unter der Brücke 14 befindet sich das Gelenk 16, das ebenfalls von dem Übergangsbalg 12 umschlossen ist. Auf dem Übergangsbalg 12 ist in der Mittellängsachse des Fahrzeugs der Kanalbalg 20 angeordnet, wobei zur Fixierung des Kanalbalges 20 auf dem Übergangsbalg 12 eine Mehrzahl von hintereinander angeordneten Haltern 30 vorgesehen ist.

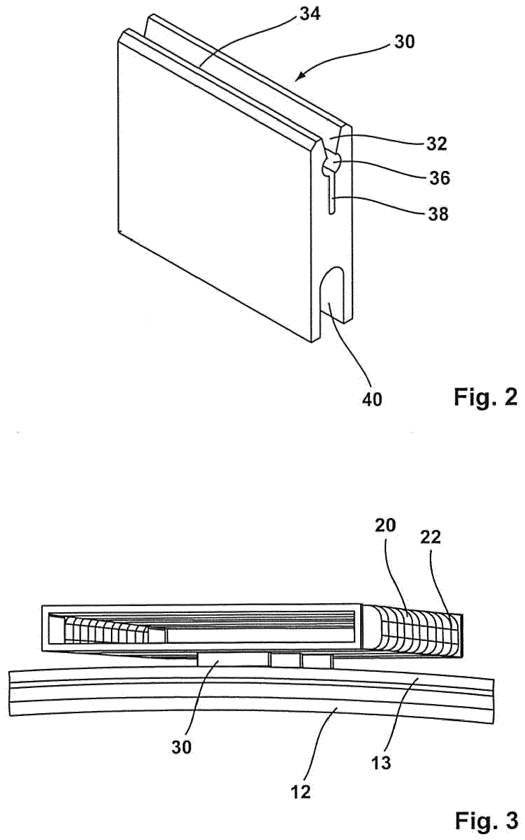

Wie sich aus Anschauung von Fig. 3 ergibt, weist der Kanalbalg 20 eine Mehrzahl von hintereinander angeordneten Kanalbalgrahmen 22 auf, wobei die Kanalbalgrahmen 22 des Kanalbalgs 20 im Wesentlichen tunnelartig oder kastenförmig umlaufend ausgebildet sind. Der Kanalbalg 20 kann hierbei wellen- oder auch faltenförmig ausgebildet sein, entsprechend der Ausbildung des Übergangsbalges. Der Übergangsbalg 12 weist ebenfalls umlaufende Übergangsbalgrahmen 13 auf, wobei die Übergangsbalgrahmen 13 des Übergangsbalges 12 durch die Halter 30 mit den entsprechenden Kanalbalgrahmen 22 des Kanalbalges 20 in lösbarer Verbindung stehen.

Zur Bildung einer lösbaren Steckverbindung weist der in Fig. 2 perspektivisch dargestellte Halter 30 eine Klemmnut 32 auf, wobei die Klemmnut 32 auf ihrem dem Kanalbalgrahmen 22 zugewandten offenen Ende einen Einführkonus 34 zeigt, an den sich eine Aussparung 36 anschließt, wobei die Aussparung 36 im Querschnitt in etwa der Querschnittsfläche des Kanalbalgrahmens 22 entspricht, sodass durch die Aussparung der Kanalbalgrahmen im Wesentlichen formschlüssig klemmend erfassbar ist. An die Aussparung 36 schließt sich ein Klemmhals 38 an, der sich vom Grundsatz her als im Halter 30 angeordneter Schlitz darstellt. Durch die Höhe und Breite des als Schlitz ausgebildeten Klemmhalses 38 kann die Klemmkraft, mit der der Kanalbalgrahmen 22 durch die Aussparung 36 gehalten wird, variabel gestaltet werden.

An der der Klemmnut 32 gegenüberliegenden Seite des Halters 30 befindet sich die Balgrahmennut 40, die der Aufnahme des Übergangsbalgrahmens 13 (Fig. 3) dient. Die Balgrahmennut 40 weist hierbei eine Querschnittsform auf, die in etwa mit der des Übergangsbalgrahmens 13 korreliert. Die Fixierung des Übergangsbalgrahmens 13 in der Balgrahmennut 40 erfolgt beispielsweise durch Nieten oder auch durch Schrauben. Die Verbindung zwischen dem Übergangsbalgrahmen 13 und dem Halter 30 kann hierbei unlösbar sein, da durch die Klemmnut 32 an der gegenüberliegenden Längs- oder Stirnseite des Halters 30 der Kanalbalgrahmen des Kanalbalges lösbar aufgenommen ist.

### Bezugszeichentiste:

- 1: Gelenkfahrzeug
- 2: Fahrzeugteil
- 3: Fahrzeugteil
- 10: Übergang
- 12: Übergangsbalg
- 13: Übergangsbalgrahmen
- 14: Brücke
- 16: Gelenk
- 20: Kanalbalg
- 22: Kanalbalgrahmen
- 30: Halter
- 32: Klemmnut
- 34: Einführkonus
- 36: Aussparung in der Klemmnut
- 38: Klemmhals
- 40: Balgrahmennut

## Patentansprüche

1. Übergangsbalg (12) eines Übergangs (10) zwischen zwei gelenkig miteinander verbundenen Fahrzeugen oder Fahrzeugteilen (2, 3), wobei der Übergangsbalg (12) Übergangsbalgrahmen (13) aufweist, wobei der Übergangsbalg (12) einen gesonderten mit Kanalbalgrahmen (22) versehenen Kanalbalg (20) aufweist, wobei zur Verbindung des Kanalbalges (20) mit dem Übergangsbalg (12) mindestens ein Befestigungsmittel vorgesehen ist,
**dadurch gekennzeichnet,**
**dass** das Befestigungsmittel zwischen Übergangsbalg (12) und Kanalbalg (20) als Halter ausgebildet ist, der zumindest mit dem einen Ende mit einem Kanalbalgrahmen (22) des Kanalbalges (20) und mit dem anderen Ende mit einem Übergangsbalgrahmen (13) des Übergangsbalges (12) in Verbindung steht, wobei die Verbindung zwischen Übergangsbalgrahmen (13) und Halter und/oder Kanalbalgrahmen (22) und Halter als lösbare Steckverbindung ausgebildet ist.

2. Übergangsbalg (12) nach Anspruch 1,
**dadurch gekennzeichnet,**
**dass** der Kanalbalg (20) sich über die Länge des Übergangsbalges (12) erstreckt.

3. Übergangsbalg (12) nach einem der voranstehenden Ansprüche,
**dadurch gekennzeichnet,**
**dass** der Kanalbalg (20) mittig und parallel zur Mittellängsachse an dem Übergangsbalg (12) angeordnet ist.

4. Übergangsbalg (12) nach einem der voranstehenden Ansprüche,
**dadurch gekennzeichnet,**
**dass** der Halter (30) mindestens eine Klemmnut (32) für einen Balgrahmen aufweist.

5. Übergangsbalg (12) nach Anspruch 4,
**dadurch gekennzeichnet,**
**dass** die Klemmnut (32) eine sich längs der Klemmnut (32) erstreckende, etwa der Querschnittsfläche eines Kanalbalgrahmens (22) entsprechende Aussparung (36) aufweist.

6. Übergangsbalg (12) nach einem der Ansprüche 4 oder 5,
**dadurch gekennzeichnet,**
**dass** die Klemmnut (32) einen sich an die Aussparung (36) anschließenden Klemmhals (38) aufweist.

7. Übergangsbalg (12) nach einem der Ansprüche 4 bis 6,
**dadurch gekennzeichnet,**
**dass** die Klemmnut (32) einen sich über die Länge der Klemmnut (32) erstreckenden Einführkonus (34) aufweist.

8. Übergangsbalg (12) nach einem der voranstehenden Ansprüche,
**dadurch gekennzeichnet,**
**dass** zur Befestigung des Halters an einem Übergangsbalgrahmen (13) der Halter eine Balgrahmennut (40) aufweist.

9. Übergangsbalg (12) nach Anspruch 8,
**dadurch gekennzeichnet,**
**dass** der Übergangsbalgrahmen (13) in der Balgrahmennut (40) fixiert, zum Beispiel vernietet ist.

10. Übergangsbalg (12) nach einem der Ansprüche 4 bis 9,
**dadurch gekennzeichnet,**
**dass** der Halter (30) durch die Klemmnut (32) an einem Ende mit dem Kanalbalgrahmen (22) und an dem anderen gegenüberliegenden Ende mit dem Übergangsbalgrahmen (13) verbunden ist.

11. Übergangsbalg (12) nach einem der voranstehenden Ansprüche,
**dadurch gekennzeichnet,**
**dass** der Kanalbalg (20) der Luftführung einer Klimaanlage dient.

12. Übergangsbalg (12) nach einem der voranstehenden Ansprüche,
**dadurch gekennzeichnet,**
**dass** der Halter (30) platten- oder rahmenförmig ausgebildet ist.

## Claims

1. A gangway bellows (12) of a gangway (10) between two articulately-connected vehicles or vehicle parts (2, 3), wherein the gangway bellows (12) comprises gangway bellows frames (13), wherein the gangway bellows (12) comprises a separate duct bellows (20) equipped with a duct bellows frame (22), wherein at least one fastener is provided for connecting the duct bellows (20) with the gangway bellows (12),
**characterized in that**
the fastener between the gangway bellows (12) and the duct bellows (20) is formed as a mount, which is connected at least at the one end with a duct bellows frame (22) of the duct bellows (20) and at the other end with a gangway bellows frame (13) of the gangway bellows (12), wherein the connection between the gangway bellows frame (13) and the mount and/or the duct bellows frame (22) and the mount is formed as a detachable push-on connector.

2. The gangway bellows (12) according to claim 1,
**characterized in that**
the duct bellows (20) extends along the length of the gangway bellows (12).

3. The gangway bellows (12) according to one of the afore-mentioned claims,
**characterized in that**
the duct bellows (20) is centered and disposed parallel to the center longitudinal axis on the gangway bellows (12).

4. The gangway bellows (12) according to one of the afore-mentioned claims,
**characterized in that**
the mount (30) comprises at least one clamping groove (32) for a bellows frame.

5. The gangway bellows (12) according to claim 4,
**characterized in that**
the clamping groove (32) comprises a recess (36) extending along the clamping groove (32) and corresponding approximately to the cross-sectional area of a duct bellows frame (22).

6. The gangway bellows (12) according to one of the claims 4 or 5,
**characterized in that**
the clamping groove (32) comprises a clamping gorge (38) joined with the recess (36).

7. The gangway bellows (12) according to one of the claims 4 to 6,
**characterized in that**
the clamping groove (32) comprises an insertion cone (34) extending along the length of the clamping groove (32).

8. The gangway bellows (12) according to one of the afore-mentioned claims,
**characterized in that**
the mount comprises a bellows frame groove (40) for fastening the mount on a gangway bellows frame (13).

9. The gangway bellows (12) according to claim 8,
**characterized in that**
the gangway bellows frame (13) is fixed, for example riveted in the bellows frame groove (40).

10. The gangway bellows (12) according to one of the claims 4 to 9,
**characterized in that**
the mount (30) is connected at one end with the duct bellows frame (22) and at the other opposite end with the gangway bellows frame (13) by the clamping groove (32).

11. The gangway bellows (12) according to one of the afore-mentioned claims,
**characterized in that**
the duct bellows (20) serves to route an air flow of an air-conditioning system.

12. The gangway bellows (12) according to one of the afore-mentioned claims,
**characterized in that**
the mount (30) is designed in form of a plate or frame.

## Revendications

1. Soufflet de passage d'intercirculation (12) d'un passage d'intercirculation (10) entre deux véhicules ou parties de véhicule (2, 3) reliées de manière articulée, où le soufflet de passage (12) comporte un cadre de soufflet de passage (13), où le soufflet de passage (12) comporte un soufflet de conduit (20) séparé pourvu d'un cadre de soufflet de conduit (22), où au moins un moyen de fixation est prévu pour connecter le soufflet de conduit (20) au soufflet de passage (12),
**caractérisé en ce que**
le moyen de fixation entre le soufflet de passage (12) et le soufflet de conduit (20) prend la forme d'un support de montage qui est connecté au moins à l'une de ses extrémités avec un cadre de soufflet de conduit (22) du soufflet de conduit (20) et à l'autre extrémité avec un cadre de soufflet de passage (13) du soufflet de passage (12), où la connexion entre le cadre de soufflet de passage (13) et le support de montage et/ou entre le cadre de soufflet de conduit (22) et le support de montage prend la forme d'une connexion enfichable détachable.

2. Soufflet de passage d'intercirculation (12) selon la revendication 1,
**caractérisé en ce que**
le soufflet de conduit (20) s'étend sur toute la longueur du soufflet de passage (12).

3. Soufflet de passage d'intercirculation (12) selon l'une des revendications précédentes,
**caractérisé en ce que**
le soufflet de conduit (20) est centré et disposé parallèlement à l'axe longitudinal central sur le soufflet passage (12).

4. Soufflet de passage d'intercirculation (12) selon l'une des revendications précédentes,
**caractérisé en ce que**
le support de montage (30) comporte au moins une rainure de serrage (32) pour un cadre de soufflet.

5. Soufflet de passage d'intercirculation (12) selon la revendication 4,
**caractérisé en ce que**
la rainure de serrage (32) comporte un évidement (36) s'étendant le long de la rainure de serrage (32) et correspondant approximativement à la section transversale d'un cadre de soufflet de conduit (22).

6. Soufflet de passage d'intercirculation (12) selon l'une des revendications 4 ou 5,
**caractérisé en ce que**
la rainure de serrage (32) comporte une gorge de serrage (38) rattachée à l'évidement (36).

7. Soufflet de passage d'intercirculation (12) selon l'une des revendications 4 à 6,
**caractérisé en ce que**
la rainure de serrage (32) comporte un cône d'insertion (34) s'étendant sur toute la longueur de la rainure de serrage (32).

8. Soufflet de passage d'intercirculation (12) selon l'une des revendications précédentes,
**caractérisé en ce que**
pour fixer le support de montage sur un cadre de soufflet de passage (13), le support de montage comporte une rainure de cadre de soufflet (40).

9. Soufflet de passage d'intercirculation (12) selon la revendication 8,
**caractérisé en ce que**
le cadre de soufflet de passage (13) est fixé, par exemple riveté, dans la rainure de cadre de soufflet (40).

10. Soufflet de passage d'intercirculation (12) selon l'une des revendications 4 à 9,
**caractérisé en ce que**
le support de montage (30) est raccordé à une extrémité avec le cadre de soufflet de conduit (22) et à l'autre extrémité opposée avec le cadre de soufflet de passage (13) par la rainure de serrage (32).

11. Soufflet de passage d'intercirculation (12) selon l'une des revendications précédentes,
**caractérisé en ce que**
le soufflet de conduit (20) sert à guider l'air d'une climatisation.

12. Soufflet de passage d'intercirculation (12) selon l'une des revendications précédentes,
**caractérisé en ce que**
le support de montage (30) est en forme de plaque ou de cadre.
